# EUROPEAN PATENT SPECIFICATION

(11) **EP 2 973 820 B1**
(45) Date of publication and mention of the grant of the patent: **15.08.2018**
(21) Application number: 14764688.9
(22) Date of filing: 12.03.2014
(51) Int. Cl.: H01M 8/06, C12Q 1/54, B01J 35/00, C25B 1/00, C25B 3/04, C25B 9/06

(54) **ELECTROCHEMICAL PROCESS AND SYSTEM FOR PRODUCING GLUCOSE**
ELEKTROCHEMISCHES VERFAHREN UND VORRICHTUNG ZUR HERSTELLUNG VON GLUCOSE
PROCÉDÉ ÉLECTROCHIMIQUE ET SYSTÈME DE PRODUCTION DE GLUCOSE

(30) Priority: 15.03.2013 US 201361787338 P
(43) Date of publication of application: 20.01.2016
(73) Proprietor: Solis Herrera, Arturo, CEP-20000 Aguascalientes (MX)
(72) Inventor: Solis Herrera, Arturo, CEP-20000 Aguascalientes (MX)
(74) Representative: Flaccus, Rolf-Dieter
(86) International application number: PCT/IB2014/000315
(87) International publication number: WO 2014/140740

(56) References cited:
- US-A- 3 877 358
- US-A- 5 384 116
- US-A- 5 384 116
- US-A1- 2011 244 345
- US-A1- 2011 244 345
- US-A1- 2012 205 590

## Description

### FIELD OF THE INVENTION

The invention relates to processes and systems for producing glucose. In particular, the invention relates to the production of glucose from water, carbon dioxide, electromagnetic energy, and melanin, melanin precursors, melanin derivatives, melanin analogs, or melanin variants.

### BACKGROUND OF THE INVENTION

Glucose is a simple sugar having the general chemical formula C₆H₁₂O₆. Glucose is a basic molecule of the food chain and is consumed by many organisms as a primary source of energy. One well studied process that results in the production of glucose is plant photosynthesis.

In general, photosynthesis is the process of converting light energy into chemical energy. More specifically, through the process of photosynthesis, plants use light energy to convert carbon dioxide (CO₂) and water (H₂O) into oxygen (O₂) and glucose. Another critical component to this process is the pigment known as chlorophyll. Chlorophyll initiates photosynthesis by absorbing light energy or photons. For every photon absorbed, chlorophyll loses one electron, creating a flow of electrons which subsequently generates the energy necessary to catalyze the splitting of water into hydrogen ions or protons (H⁺) and O₂. The resulting proton gradient is used to generate chemical energy in the form of adenosine triphosphate (ATP). This chemical energy is then used to convert carbon dioxide and water into glucose.

Similar to chlorophyll, melanin is also classified as a pigment. Melanin is composed of nitrogen, oxygen, hydrogen and carbon, although the exact structure has not been fully elucidated. Melanin is ubiquitous in nature and methods are also known in the literature for synthesis of melanin. For many years, melanin had no biological or physiological function attributed to it, other than it being considered a simple sunscreen with a low protection factor equivalent to that of a 2% copper sulfate solution. Melanin has also been considered the darkest molecule because it is able to absorb energy of almost any wavelength, yet it did not seem to emit any energy. This was unique to melanin, and it contradicted thermodynamic laws because other compounds capable of absorbing energy, particularly pigments, emit a portion of the energy absorbed. The electronic properties of melanin have thus been the focus of attention for quite some time. However, melanin is one of the most stable compounds known to man and, for a long time, it seemed that melanin was unable to catalyze any chemical reaction.

Recently, the intrinsic property of melanin to absorb energy and utilize the absorbed energy to split and subsequently reform the water molecule was discovered. Thus, melanin absorbs all wavelengths of electromagnetic energy, including visible and invisible light energy, and dissipates this absorbed energy by means of water dissociation and its consequent reformation. A photoelectrochemical process for separating water into hydrogen and oxygen, using melanin, and analogs, precursors, derivatives, or variants of melanin is described in U.S. Patent Application Publication No. US 2011/0244345.

Without wishing to be bound by any theories, it is believed that the reaction inside melanin occurs according to the following Scheme I:

**2H₂O ↔ 2H₂ + O₂ + 4e⁻** **(I)**

Upon the absorption of electromagnetic energy such as light energy (visible or invisible), melanin catalyzes the dissociation of water into diatomic hydrogen (H₂), diatomic oxygen (O₂), and electrons (e⁻). Although the splitting of water into hydrogen and oxygen consumes energy, the reaction is reversible, and in the reverse process the reduction of oxygen atoms with diatomic hydrogen to reform the water molecules liberates energy.

Thus, melanin is able to transform light energy into chemical energy, analogous to the process by which plants use chlorophyll to transform light energy into chemical energy during photosynthesis. Therefore, by analogy, we have designated this process "human photosynthesis." However, there are at least two important distinctions between the water splitting reaction carried out by melanin and that carried out by chlorophyll. The first is that chlorophyll cannot catalyze the reverse process of reforming the water molecule. The second is that the water splitting reaction by chlorophyll can only occur in a living cell and with visible light having a wavelength in the range of 400 nm to 700 nm. Thus, the subsequent production of glucose can also only occur inside the living cell. In contrast, melanin can split and reform the water molecule outside of a living cell using any form of electromagnetic energy, particularly with light energy (visible or invisible) having a wavelength in the range of 200 nm to 900 nm.

### BRIEF SUMMARY OF THE INVENTION

It is now discovered that upon the absorption of electromagnetic energy, such as invisible or visible light energy, melanin can split and reform the water molecule, and subsequently catalyze a reaction that transforms carbon dioxide (CO₂) and water into glucose.

The invention relates to electrochemical processes and systems for utilizing melanin, melanin precursors, melanin derivatives, melanin analogs, and melanin variants to produce glucose from carbon dioxide and water. According to embodiments of the invention, melanin can be used to produce glucose from carbon dioxide and water, additionally requiring only a source of electromagnetic energy, such as invisible or visible light energy, gamma rays, X-rays, ultraviolet radiation, infrared radiation, microwaves, and radiowaves. Unlike the ability of chlorophyll to convert light energy into chemical energy, which is subsequently used to produce glucose in living cells by the process of photosynthesis, melanin can be used to produce glucose via an electrochemical process that can be performed outside a living cell. Thus, until now, such a process for producing glucose has not been replicated in the laboratory.

In one general aspect, the invention relates to an electrochemical process for producing glucose (C₆H₁₂O₆) and glucose precursors having the general formula CₙH₂ₙOₙ, wherein n represents 2, 3, 4, 5, or 6. According to the invention, the electrochemical process comprises reacting water and carbon dioxide gas dissolved therein, in the presence of at least one melanin device and a source of electromagnetic energy. The at least one melanin device comprises melanin and a substrate to prevent the melanin from being dispersed throughout the water. Because melanin is able to absorb electromagnetic energy and transform this electromagnetic energy into usable chemical energy, an external electric current is not required for the production of glucose according to an electrochemical process of the invention. According to a preferred embodiment, an electrochemical process of the invention is a photoelectrochemical process, and the source of electromagnetic energy is photoelectric energy selected from visible and invisible light having a wavelength in the range of 200 nm to 900 nm.

As indicated above, the invention relates to an electrochemical process for producing CₙH₂ₙOₙ species, wherein n represents 2, 3, 4, 5, or 6, such that a CₙH₂ₙOₙ species produced by a process of the invention is a glucose precursor, or glucose itself. According to embodiments of the invention, the electrochemical process comprises reacting water and carbon dioxide gas dissolved therein, in the presence of at least one melanin device as defined above and a source of electromagnetic energy, preferably photoelectric energy selected from visible and invisible light energy having a wavelength in the range of 200 nm to 900 nm.

In yet another general aspect, the invention relates to a system for producing glucose or glucose precursors having the general formula CₙH₂ₙOₙ, wherein n represents 2, 3, 4, 5, or 6 via an electrochemical process, the system comprising:
(i) a reaction cell for receiving water and CO₂ gas dissolved therein, and at least one melanin device, wherein the at least one melanin device comprises melanin and a substrate, such that melanin is prevented from being dispersed throughout the water; and
(ii) a source of electromagnetic energy, such that the electromagnetic energy is transmitted into the reaction cell and is absorbed by the melanin.

The system for producing glucose according to embodiments of the invention does not require any complicated operation or set-up, and thus only requires a container for receiving water and CO₂ gas dissolved therein, and at least one melanin device as defined above, as well as a source of electromagnetic energy to provide the at least one melanin material with sufficient amounts of energy to catalyze the splitting and reformation of the water molecule and the subsequent formation of glucose. According to a preferred embodiment, the source of electromagnetic energy transmits visible or invisible light energy having a wavelength between 200 nm and 900 nm into the reaction cell.

The details of one or more embodiments of the invention are set forth in the description below. Other features and advantages will be apparent from the following detailed description and the appended claims.

### DETAILED DESCRIPTION OF THE INVENTION

All patents and publications referred to herein are incorporated by reference. Unless otherwise defined, all technical and scientific terms used herein have the same meaning as commonly understood to one of ordinary skill in the art to which this invention pertains. Otherwise, certain terms used herein have the meanings as set forth in the specification.

It must be noted that as used herein and in the appended claims, the singular forms "a," "an," and "the" include plural references unless the context clearly dictates otherwise.

As used herein, the term "electrolysis of water" refers to the process of splitting water molecules into oxygen and hydrogen. As used herein, "water-electrolyzing material" refers to a substance that is capable of splitting the water molecule into oxygen and hydrogen. According to
embodiments of the invention, melanin materials including melanin (natural and synthetic), melanin precursors, melanin derivatives, melanin analogs, and melanin variants are water-electrolyzing materials.

As used herein, the term "melanin material" refers to melanin, melanin precursors, melanin derivatives, melanin analogs, and melanin variants including natural and synthetic melanin, eumelanin, pheomelanin, neuromelanin, polyhydroxyindole, eumelanin, alomelanin, humic acid, fulerens, graphite, polyindolequinones, acetylene black, pyrrole black, indole black, benzence black, thiophene black, aniline black, polyquinones in hydrated form, sepiomelanins, dopa black, dopamine black, adrenalin black, catechol black, 4-amine catechol black, in simple linear chain aliphatics or aromatics; or their precursors as phenols, aminophenols, or diphenols, indole polyphenols, quinones, semiquinones or hydroquinones, L-tyrosine, L-dopamine, morpholine, ortho-benzoquinone, dimorpholine, porphyrin black, pterin black, and ommochrome black.

According to embodiments of the invention, an electrochemical process for producing glucose comprises reacting water and CO₂ gas dissolved therein, in the presence of at least one melanin material and a source of electromagnetic energy. Forms of electromagnetic energy suitable for use in an electrochemical process of the invention include visible and invisible light, gamma rays, X-rays, ultraviolet radiation, infrared radiation, microwaves, and radiowaves. According to a preferred embodiment, an electrochemical process according to the invention is a photoelectrochemical process, wherein the source of electromagnetic energy is photoelectric energy selected from visible light and invisible (ultraviolet and infrared radiation) light.

According to embodiments of the invention, the at least one melanin material is selected from melanin, melanin precursors, melanin derivatives, melanin analogs, and melanin variants. In a preferred embodiment, the at least one melanin material is selected from natural melanin and synthetic melanin.

According to embodiments of the invention, melanin can by synthesized from amino acid precursors of melanin, such as L-tyrosine. However, melanin materials can be obtained by any method known in the art in view of the present disclosure, including chemically synthesizing melanin materials and isolating melanin materials from natural sources, such as plants and animals.

According to another embodiment of the invention, an electrochemical process can be carried out in the presence of at least one melanin device. The melanin device is comprised of a substrate and at least one melanin material, such that the melanin material is held on or within the substrate. The melanin material can be dispersed throughout the substrate or adsorbed onto the substrate. Preferably, the substrate is transparent to allow for increased transmission of electromagnetic energy in the form of light energy, and therefore increased glucose production. A melanin device can comprise one type of melanin material, or more than one type of melanin material. For example, a melanin device for use in the invention can comprise melanin and eumelanin. According to another embodiment of the invention, more than one melanin device, with each device comprising a different type of melanin material can be used. For example, a first melanin device comprising melanin and a second melanin device comprising eumelanin can both be used in a process of producing glucose according to the invention.

A purpose of using a melanin device in an electrochemical process of the invention is to prevent the melanin material from dissolving in the water, diffusing through the water, or floating freely throughout the water. The melanin device ensures that the water retains its transparency and melanin is not lost during replenishment of water or CO₂ or removal of glucose. Thus, the melanin device allows for the melanin material to remain in contact with the water without being dissolved in the water. The substrate of the melanin device can be any inert material, including, but not limited to, silica, plastic, and glass. The melanin device can be, for example, a melanin/silica plate, which can be made by combining a cementing mixture of silica with an aqueous melanin solution. Preferably, a melanin device for use in the invention is melanin mixed with silica.

According to embodiments of the invention, the melanin device can take on any size or shape, including but not limited to a rod (cylindrical), plate, sphere, or cube-shape. At least one melanin device can be used, but the number of melanin devices, or the size or shape of the melanin devices, is not limited in any way. The rate of the reaction will be controlled by the size, shape, surface area, amount of melanin material and number of melanin devices used in the reaction. According to a preferred embodiment, the size, shape and number of melanin devices are selected based on the desired reaction rate of the electrochemical process. For example, using a larger number of melanin devices will result in a faster rate of glucose production. As another illustrative example, a larger amount of melanin material in the melanin device will result in a faster rate of glucose production.

An electrochemical process according to embodiments of the invention will be initiated when the melanin material absorbs electromagnetic energy and catalyzes the electrolysis of water into H₂ and O₂. According to one embodiment of the invention (batch process), carbon dioxide gas is dissolved in the water only once, prior to the initiation of the photoelectrochemical process. According to another embodiment (continuous process), the photoelectrochemical process further comprises continuously dissolving CO₂ gas in the water to continuously replenish the CO₂ gas as it is consumed and converted to glucose. Any suitable method for continuously dissolving CO₂ gas in the water can be used. For example, the CO₂ gas can be continuously injected into the water by pipes or tubes connected to a gas pump. The pipes or tubes can be made of any material that is inert and substantially impermeable to CO₂ gas, including but not limited to polyethylene.

According to a particular embodiment of the invention, a process for producing glucose is a photoelectrochemical process requiring a source of photoelectric energy. Preferably, the source of photoelectric energy is either visible or invisible light having a wavelength ranging from 200 nm to 900 nm. In a more preferred embodiment, the source of photoelectric energy is natural light.

According to another embodiment of the invention, the electrochemical process can be performed at room temperature (approximately 25°C), preferably at a temperature below room temperature in the range of 0°C to 25°C, and more preferably at a temperature ranging from 2°C to 8°C. Although lower temperatures can decrease the turnover rate of splitting and reforming the water molecules, a lower temperature incubation preserves the CO₂ gas bubbles introduced at the start of the process and eliminates the need to continuously inject CO₂ gas into the water. Thus, using lower temperatures has the main advantage of rendering the electrochemical process technically simpler to execute.

An electrochemical process according to the invention can further comprise a step of isolating the glucose obtained from the reaction of carbon dioxide, water, and the at least one melanin material. As an illustrative example, glucose can be isolated by evaporating the aqueous reaction solution. However, glucose can be identified and measured without being isolated by, for example, spectrophotometry.

The invention also relates to an electrochemical process for producing CₙH₂ₙOₙ species, wherein n represents an integer. Preferably n is 1, 2, 3, 4, 5, or 6, such that the CₙH₂ₙOₙ species is a glucose precursor, or glucose itself. According to embodiments of the invention, an electrochemical process for producing CₙH₂ₙOₙ species can be the same as that used to produce glucose, and comprises reacting water and CO₂ gas dissolved therein, in the presence of at least one melanin material and a source of electromagnetic energy. Preferably, the source of electromagnetic energy is photoelectric energy selected from visible light and invisible (ultraviolet and infrared radiation) light. Other embodiments of a process for producing CₙH₂ₙOₙ species according to the invention can be the same as those described for an electrochemical process for producing glucose according to the invention. Preferably, an electrochemical process for producing CₙH₂ₙOₙ species is a photoelectrochemical process.

The precise mechanism by which melanin is able use electromagnetic energy to produce glucose, glucose precursors, and other CₙH₂ₙOₙ species from CO₂ and water in an electrochemical process according to embodiments of the invention is not yet fully understood. Without wishing to be bound by any theories, it is believed that melanin absorbs the electromagnetic energy, promoting conversion of low energy electrons to high energy electrons. The high energy electrons are transferred by mobile electron carriers within the melanin material. This electron transfer releases energy and establishes a proton gradient sufficient to initiate the splitting of water into diatomic hydrogen (H₂) and diatomic oxygen (O₂) along with the release of four high energy electrons. Thus, melanin releases molecules of H₂ and O₂, as well as a flow of high energy electrons in all directions, controlled by diffusion. The released hydrogen and high energy electrons have different types of energy, and it is thought that both types of energy play a role in the conversion of CO₂ and water into glucose and other CₙH₂ₙOₙ species. Although the splitting of water into H₂ and O₂ consumes energy, the reaction is reversible and the reduction of O₂ with H₂ to reform the water molecules liberates energy. Thus, after the water molecule is split, the water molecule must be reformed in order to supply energy to the glucose production reaction that occurs from the fusion of CO₂ and water.

Many factors will affect the rate and efficiency of an electrochemical process for producing glucose according to embodiments of the invention. These factors include, but are not limited to, the amount of energy released by splitting and reforming the water molecules, the entropy of the dissolved CO₂ gas, the amount of dissolved CO₂ gas, temperature, pressure, the wavelength of electromagnetic energy supplied to the reaction, and the amount of electromagnetic energy absorbed by the melanin material.

According to a preferred embodiment of the invention, an electrochemical process for producing glucose is performed under sterile conditions, meaning that there is substantially no bacteria present in the reaction. Because bacteria can consume glucose, the presence of bacteria can decrease the amount of glucose produced by an electrochemical process according to the invention. Reactions can be sterilized by any method known in the art in view of the present disclosure, including but not limited to filter sterilization and heat sterilization.

The dissociation and reformation of the water molecule to produce energy that is subsequently used to produce glucose from carbon dioxide and water can by catalyzed by at least one melanin material, wherein the at least one melanin material is the only water-electrolyzing material present in the reaction. Thus, in particular embodiments of the invention, the at least one melanin material is the only water-electrolyzing material used in an electrochemical process for producing glucose. According to a preferred embodiment, melanin (synthetic or natural) is the only water electrolyzing material used in a process for producing glucose.

Another aspect of the invention provides a system for producing glucose via an electrochemical process. According to embodiments of the invention, the system is comprised of a reaction cell and a source of electromagnetic energy. As used herein, the term "reaction cell" refers to any container that can receive and hold water and carbon dioxide gas dissolved therein. The reaction cell can take on any shape, and can be made of any suitable material including, but not limited to, plastics, glass, and any other materials that allow for the transmission of the desired wavelengths of electromagnetic energy into the reaction cell, such that the electrochemical process can occur. The material of the reaction cell is preferably transparent to allow for the transmission of visible light. The material of the reaction cell is also preferably substantially impermeable to carbon dioxide.

According to another embodiment, the reaction cell is a closed reaction cell. A closed reaction cell is sealed to prevent carbon dioxide gas from escaping the reaction cell, and can be made of any suitable material as discussed above. Preferably, the reaction cell is closed. The reaction cell receives water and CO₂ gas dissolved therein, and at least one melanin material. The at least one melanin material is selected from melanin, melanin precursors, melanin derivatives, melanin analogs, and melanin variants, and is preferably melanin (synthetic or natural). In another embodiment of the invention, a system comprises the at least one melanin material as part of at least one melanin device, the device comprised of a substrate and a melanin material as discussed above. Preferably, the melanin device comprises melanin (natural or synthetic) and silica.

A system according to the invention is preferably sterile, and lacks the presence of any bacteria. The system, including one or more of its component parts (reaction cell, tubing, etc.) can be sterilized according to any method known in the art that eliminates or kills bacteria, such as by applying heat, chemicals, irradiation, pressure, or filtration.

According to embodiments of the invention, the energy provided by the source of electromagnetic energy to the reaction cell is transmitted through the reaction cell, such that it is absorbed by the melanin material. In a preferred embodiment, the source of electromagnetic energy provides invisible or visible light energy having a wavelength between 200 nm and 900 nm to the reaction cell.

According to another embodiment of the invention, the system can further comprise a device for continuously injecting CO₂ gas into the reaction cell. The device can be, for example, a gas pump. The device can be connected to the reaction cell by pipes or tubes. If the reaction cell is closed, the device is preferably connected in such a way that allows for the closed reaction cell to remain sealed to prevent CO₂ gas from escaping. Thus, using a closed reaction cell has the advantage of eliminating the need to continuously inject carbon dioxide into the reaction cell, provided that the container is sufficiently sealed to prevent the carbon dioxide gas from escaping.

According to embodiments of the invention, a system for producing glucose via an electrochemical process can also be used to produce CₙH₂ₙOₙ species. Preferably the CₙH₂ₙOₙ species is a glucose precursor, wherein n represents 1, 2, 3, 4, or 5.

The electrochemical process and system for producing glucose according to embodiments of the invention, in addition to CO₂ gas dissolved in water, requires only the presence of a melanin material and electromagnetic energy, preferably photoelectric energy, and more preferably light energy, and thus is environmentally friendly because no source of external energy, other than that present in the natural surroundings is required. Furthermore, no complex setup or maintenance is required. The only maintenance required is the replacement of the water and dissolved CO₂ gas once CO₂ has been consumed and transformed into glucose. Because melanin is one of the most stable molecules known to man, having a half-life estimated to be on the order of millions of years, the melanin material or melanin device can be used for decades before it needs to be replaced.

In a preferred embodiment, the at least one melanin material in the system is melanin (natural or synthetic). In another preferred embodiment, melanin is the only water-electrolyzing material present in the system.

The electrochemical process and system for producing glucose according to embodiments of the invention have at least two important applications. The first application is the production of glucose, as described above, which is a basic molecule of the food chain. The second application is related to the control of atmospheric CO₂. According to embodiments of the invention, the production of glucose requires the consumption of CO₂. Thus, the invention further provides a method for reducing atmospheric CO₂ levels.

Carbon dioxide (CO₂) is the principal greenhouse gas that results from human activities, and the concentration of atmospheric CO₂ is increasing at an accelerating rate, contributing to global warming and climate change. Although the upper safety limit for atmospheric CO₂ has been set at 350 parts per million (ppm), atmospheric CO₂ levels have remained above this limit since early 1988. In addition, paleo-climate evidence and ongoing climate change suggest that CO₂ levels will need to be reduced in order to preserve the planet in a state in which life on Earth has adapted to.

Furthermore, calculations by NASA researchers indicate that, despite unusually low solar activity between 2005 and 2010, Earth continued to absorb more energy than it returned to space. Thus, climate stabilization will also require a restoration of the Earth's energy balance as well as a reduction of CO₂ levels. In other words, Earth will need to radiate as much energy to space as it absorbs from the sun in order to slow down global warming.

Therefore, new methods for controlling the level of atmospheric CO₂ and for consuming absorbed solar energy are greatly needed. In a photoelectrochemical process according to embodiments of the invention, only light energy and at least one melanin material such as melanin (synthetic or natural), a melanin analog, or melanin precursor are required to convert CO₂ and water into glucose. Thus, both CO₂ and solar energy are consumed in the production of glucose by a photoelectrochemical process of the invention, which will contribute to a reduction of CO₂ levels while simultaneously using absorbed solar energy.

### EXAMPLES

### Example 1: Dissociation and reformation of the water molecule catalyzed by melanin.

Two 1 liter closed containers (closed reaction cells) made of polyethylene terephthalate (PET), were formed under sterile conditions each containing 1 liter of purified water. CO₂ gas was dissolved in the water in each container at an initial pressure of 5 atm, and melanin mixed with silica was placed in one of the two containers. The containers were exposed to visible light for six weeks and incubated at a temperature of about 2°C to 8°C (35.6°F to 46.4°F).

After 5 days, deformation of the plastic packaging of the container containing melanin mixed with silica was observed. In contrast, after 6 weeks of exposure to visible light, the plastic packaging of the container that did not have any melanin mixed with silica showed no visible deformation.

The results of the experiment support the claim that melanin has the intrinsic ability to dissociate and reform the water molecule in the presence of light energy. This dissociation and reformation of the water molecule produced a vacuum, as indicated by the deformation of the plastic packaging of only the closed container that contained melanin. The energy that is produced from splitting and reforming the water molecule catalyzed by melanin can subsequently be used to convert carbon dioxide and water into glucose.

### Example 2: Production of glucose from CO₂ dissolved in water, melanin and light energy.

Ten sealed, 3 liter closed containers (closed reaction cells) made of polyethylene, were formed under sterile conditions each containing 1800 mL of purified water. CO₂ was dissolved in the water in each container under a pressure of approximately 2.20 PSI, in sufficient amounts such that numerous bubbles of CO₂ gas were easily observed. Five of the containers served as the control group and contained no melanin device, and the other five containers served as the experimental group. For the experimental group, plates of melanin mixed with silica were placed at the bottom of each container. The melanin/silica plates were made by combining a cementing mixture of silica with an aqueous solution of melanin. The melanin used was chemically synthesized in the laboratory.

The containers of both the control and experimental groups were placed in a refrigerator and incubated at a temperature ranging between 2°C to 8°C (35.6°F to 46.4°F) for four weeks. The purpose of refrigerating the containers was to preserve the CO₂ gas initially dissolved in the water. This eliminated the need for continuous manipulation of the containers by having to dissolve CO₂ in the water either continuously or several times over the course of the experiment. Because the refrigerator was composed of metal walls, the source of energy supplied to the containers was mostly invisible light present within the refrigerator. The containers were kept sealed throughout the course of the experiment and the visual observance of CO₂ gas bubbles in the control group containers throughout the four week incubation confirmed that the containers were adequately sealed.

The dissolved CO₂ gas bubbles were observed daily. At the end of the first week, the CO₂ bubbles in all of the control group containers were still present and showed no change from the start of the experiment. On the other hand, in all of the experimental group containers, the dissolved CO₂ bubbles disappeared completely within a few hours. This indicated that carbon dioxide was being consumed, but only in the presence of melanin. The experiment was continued for four weeks, even though the carbon dioxide bubbles in the experimental containers had disappeared within a few hours, to determine if any other product or sediment was formed. At the end of the fourth week, the seals of each container in both the experimental and control groups were broken under sterile conditions and a 10 mL sample of water was removed from each container. It should also be noted that at the end of the fourth week, the carbon dioxide in the containers of the control group showed no change from the start of the experiment.

The 10 mL samples of water removed from each of the control group and experimental group containers were noted to be both transparent and odorless. For the experimental group, there was no sediment observed in the samples of either group, indicating that the melanin had not dispersed from the melanin/silica plates. Additional parameters, including the density, pH, and glucose concentration were measured in each sample.

The glucose concentration in each sample was determined by spectrophotometry using a standardized glucose oxidase (GOD) assay. Briefly, each sample was treated with glucose oxidase to oxidize glucose, producing gluconate and hydrogen peroxide. The hydrogen peroxide was then oxidatively coupled with 4-amino-antipyrene (4-AAP) and phenol in the presence of peroxidase, producing a red dye quinoeimine. The absorbance of quinoeimine at 505 nm, which is directly proportional to the concentration of glucose, was then measured and used to determine the concentration of glucose in the sample. The results are listed below in Table 1.

**Table 1**

| | Control Group | Experimental Group |
|---|---|---|
| Density (g/cm³) | 1.005 | 1.000 |
| pH | 7.5 | 6.5 |
| Glucose Concentration (mg/dL) | 0.0 | 0.1-0.12 |

The results of the above experiment demonstrate that glucose can be produced from carbon dioxide and water, requiring only melanin and electromagnetic energy, such as invisible light.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the invention as defined by the appended claims.

## Claims

1. An electrochemical process for producing glucose and glucose precursors having the general formula CₙH₂ₙOₙ, wherein n represents 2, 3, 4, 5, or 6, the process comprising reacting water and carbon dioxide gas dissolved therein in the presence of at least one melanin device and a source of electromagnetic energy, wherein the at least one melanin device comprises melanin and a substrate to prevent the melanin from being dispersed throughout the water.

2. The electrochemical process according to claim 1, wherein the electrochemical process is a photoelectrochemical process and the source of electromagnetic energy is visible or invisible light energy having a wavelength between 200 nm and 900 nm.

3. The electrochemical process according to claim 1, further comprising continuously dissolving carbon dioxide gas in the water.

4. The electrochemical process according to claim 1, wherein the substrate of the at least one melanin device is silica, such that a mixture of melanin and silica is formed.

5. The electrochemical process according to claim 1, wherein the process is carried out at a temperature ranging from 0 °C to 25 °C.

6. The electrochemical process according to claim 1, wherein the melanin is selected from natural melanin and synthetic melanin.

7. The electrochemical process according to claim 1, wherein melanin is the only water-electrolyzing material used in the process.

8. A system for producing glucose and glucose precursors having the general formula CₙH₂ₙOₙ, wherein n represents 2, 3, 4, 5, or 6, via an electrochemical process, the system comprising:
(i) a reaction cell for receiving water and carbon dioxide gas dissolved therein, and at least one melanin device, the at least one melanin device comprising melanin and a substrate, such that melanin is prevented from being dispersed throughout the water; and
(ii) a source of electromagnetic energy, such that the electromagnetic energy is transmitted into the reaction cell and is absorbed by the melanin.

9. The system according to claim 8, wherein the reaction cell is connected to a device for continuously injecting CO₂ gas into the reaction cell.

10. The system according to claim 8, wherein the source of electromagnetic energy is invisible or visible light energy having a wavelength between 200 nm and 900 nm.

11. The system according to claim 8, wherein the reaction cell is a closed reaction cell.

12. The system according to claim 8, wherein the melanin is selected from natural melanin and synthetic melanin.

13. The system according to claim 8, wherein the melanin is the only water-electrolyzing material present in the system.

14. The system according to claim 8, wherein the substrate of the at least one melanin device is silica, such that a mixture of melanin and silica is formed.

15. The electrochemical process according to claim 1, said process being a process for producing glucose.

## Patentansprüche

1. Elektrochemisches Verfahren zur Herstellung von Glucose und Glucose-Vorläufern der allgemeinen Formel CₙH₂ₙOₙ, worin n für 2, 3, 4, 5 oder 6 steht, wobei das Verfahren das Umsetzen von Wasser und darin gelöstem Kohlendioxidgas in Gegenwart mindestens einer Melaninvorrichtung und einer Quelle elektromagnetischer Energie umfasst, wobei die mindestens eine Melaninvorrichtung Melanin und, zur Verhinderung einer Dispersion des Melanins im Wasser, ein Substrat umfasst.

2. Elektrochemisches Verfahren nach Anspruch 1, wobei das elektrochemische Verfahren ein photoelektrochemisches Verfahren ist und die Quelle elektromagnetischer Energie die Energie sichtbaren oder unsichtbaren Lichts mit einer Wellenlänge zwischen 200 nm und 900 nm ist.

3. Elektrochemisches Verfahren nach Anspruch 1, weiterhin umfassend das kontinuierliche Lösen von Kohlendioxidgas in dem Wasser.

4. Elektrochemisches Verfahren nach Anspruch 1, wobei das Substrat der mindestens einen Melaninvorrichtung Siliciumdioxid ist, so dass ein Gemisch aus Melanin und Siliciumdioxid gebildet wird.

5. Elektrochemisches Verfahren nach Anspruch 1, wobei das Verfahren bei einer Temperatur im Bereich von 0 °C bis 25 °C durchgeführt wird.

6. Elektrochemisches Verfahren nach Anspruch 1, wobei das Melanin ausgewählt ist aus natürlichem Melanin und synthetischem Melanin.

7. Elektrochemisches Verfahren nach Anspruch 1, wobei Melanin das einzige wasserelektrolysierende Material ist, das in dem Verfahren verwendet wird.

8. System zur Herstellung von Glucose und Glucose-Vorläufern der allgemeinen Formel CₙH₂ₙOₙ, worin n für 2, 3, 4, 5 oder 6 steht, mittels eines elektrochemischen Verfahrens, wobei das System umfasst:
(i) eine Reaktionszelle zur Aufnahme von Wasser und darin gelöstem Kohlenstoffdioxidgas und mindestens eine Melaninvorrichtung, wobei die mindestens eine Melaninvorrichtung Melanin und ein Substrat umfasst, so dass eine Dispersion von Melanin im Wasser verhindert wird, und
(ii) eine Quelle elektromagnetischer Energie, so dass die elektromagnetische Energie in die Reaktionszelle übertragen und von dem Melanin absorbiert wird.

9. System nach Anspruch 8, wobei die Reaktionszelle mit einer Vorrichtung zum kontinuierlichen Injizieren von CO₂-Gas in die Reaktionszelle verbunden ist.

10. System nach Anspruch 8, wobei die Quelle elektromagnetischer Energie die Energie unsichtbaren oder sichtbaren Lichts mit einer Wellenlänge zwischen 200 nm und 900 nm ist.

11. System nach Anspruch 8, wobei die Reaktionszelle eine geschlossene Reaktionszelle ist.

12. System nach Anspruch 8, wobei das Melanin ausgewählt ist aus natürlichem Melanin und synthetischem Melanin.

13. System nach Anspruch 8, wobei das Melanin das einzige wasserelektrolysierende Material ist, das in dem System vorhanden ist.

14. System nach Anspruch 8, wobei das Substrat der mindestens einen Melaninvorrichtung Siliciumdioxid ist, so dass ein Gemisch aus Melanin und Siliciumdioxid gebildet wird.

15. Elektrochemisches Verfahren nach Anspruch 1, wobei es sich bei dem Verfahren um ein Verfahren zur Herstellung von Glucose handelt.

## Revendications

1. Procédé électrochimique pour la production de glucose et de précurseurs de glucose présentant la formule générale CₙH₂ₙOₙ, dans laquelle n représente 2, 3, 4, 5 ou 6, le procédé comprenant la réaction d'eau et de dioxyde de carbone gazeux dissous dans celle-ci en présence d'au moins un dispositif à base de mélanine et d'une source d'énergie électromagnétique, ledit au moins un dispositif à base de mélanine comprenant de la mélanine et un substrat pour empêcher la dispersion de la mélanine dans l'eau.

2. Procédé électrochimique selon la revendication 1, le procédé électrochimique étant un procédé photoélectrochimique et la source d'énergie électromagnétique étant de l'énergie lumineuse visible ou invisible d'une longueur d'onde entre 200 nm et 900 nm.

3. Procédé électrochimique selon la revendication 1, comprenant en outre la dissolution continue de dioxyde de carbone gazeux dans l'eau.

4. Procédé électrochimique selon la revendication 1, le substrat dudit au moins un dispositif à base de mélanine étant la silice de telle sorte qu'un mélange de mélanine et de silice est formé.

5. Procédé électrochimique selon la revendication 1, le procédé étant effectué à une température dans une plage de 0°C à 25°C.

6. Procédé électrochimique selon la revendication 1, la mélanine étant choisie parmi la mélanine naturelle et la mélanine synthétique.

7. Procédé électrochimique selon la revendication 1, la mélanine étant la seule matière électrolysant l'eau utilisée dans le procédé.

8. Système pour la production de glucose et de précurseurs de glucose présentant la formule générale CₙH₂ₙOₙ, dans laquelle n représente 2, 3, 4, 5 ou 6, via un procédé électrochimique, le système comprenant :
(i) une cellule de réaction pour recevoir de l'eau et du dioxyde de carbone gazeux dissous dans celle-ci et au moins un dispositif à base de mélanine, ledit au moins un dispositif à base de mélanine comprenant de la mélanine et un substrat de telle sorte que la dispersion de la mélanine dans l'eau est empêchée ; et
(ii) une source d'énergie électromagnétique, de telle sorte que l'énergie électromagnétique est transmise dans la cellule de réaction et est absorbée par la mélanine.

9. Système selon la revendication 8, la cellule de réaction étant reliée à un dispositif pour l'injection continue de CO₂ gazeux dans la cellule de réaction.

10. Système selon la revendication 8, la source d'énergie électromagnétique étant de l'énergie lumineuse invisible ou visible d'une longueur d'onde entre 200 nm et 900 nm.

11. Système selon la revendication 8, la cellule de réaction étant une cellule de réaction fermée.

12. Système selon la revendication 8, la mélanine étant choisie parmi la mélanine naturelle et la mélanine synthétique.

13. Système selon la revendication 8, la mélanine étant la seule matière électrolysant l'eau présente dans le procédé.

14. Système selon la revendication 8, le substrat dudit au moins un dispositif à base de mélanine étant la silice de telle sorte qu'un mélange de mélanine et de silice est formé.

15. Procédé électrochimique selon la revendication 1, ledit procédé étant un procédé pour la production de glucose.
